# NEUE EUROPÄISCHE PATENTSCHRIFT

(11) **EP 2 831 555 B2**
(45) Veröffentlichungstag und Bekanntmachung des Hinweises auf die Entscheidung über den Einspruch: **24.01.2024**
(45) Hinweis auf die Patenterteilung: 30.10.2019
(21) Anmeldenummer: 13704085.3
(22) Anmeldetag: 11.02.2013
(51) Int. Cl.: G01L 19/00

(54) **SENSOR ZUR ERFASSUNG EINES DRUCKS UND EINER TEMPERATUR EINES FLUIDEN MEDIUMS**
SENSOR FOR MEASURING OF A PRESSURE AND A TEMPERATURE OF A FLUID MEDIUM
SONDE POUR MESURER UNE PRESSION ET UNE TEMPÉRATURE

(30) Priorität: 28.03.2012 DE 102012204950
(43) Veröffentlichungstag der Anmeldung: 04.02.2015
(73) Patentinhaber: Robert Bosch GmbH, 70442 Stuttgart (DE)
(72) Erfinder: HABIBI, Masoud, 71701 Schwieberdingen (DE); ESLAMI, Reza, 70806 Kornwestheim (DE); REINHARD, Markus, 70806 Kornwestheim (DE)
(86) Internationale Anmeldenummer: PCT/EP2013/052667
(87) Internationale Veröffentlichungsnummer: WO 2013/143748

(56) Entgegenhaltungen:
- DE-A1-102007 035 812
- US-A1- 2007 121 701
- US-B1- 7 210 346

## Beschreibung

### Stand der Technik

In verschiedenen Bereichen der Technik, wie beispielsweise den Naturwissenschaften oder der Medizintechnik, müssen eine oder mehrere Eigenschaften fluider Medien erfasst werden. Hierbei kann es sich grundsätzlich um beliebige physikalische und/oder chemische Eigenschaften der fluiden Medien, also der Gase und/oder Flüssigkeiten handeln, wie beispielsweise Temperatur, Druck, Strömungseigenschaften oder Ähnliches. Ein wichtiges Beispiel, auf welches die vorliegende Erfindung jedoch nicht beschränkt ist, ist die Erfassung eines Drucks des fluiden Mediums. Drucksensoren sind beispielsweise aus Konrad Reif (Hrsg.): Sensoren im Kraftfahrzeug, 1. Auflage 2010, Seiten 134-136 bekannt. Ein weiteres Beispiel sind Temperatursensoren, wie sie beispielsweise aus Konrad Reif (Hrsg.): Sensoren im Kraftfahrzeug, 1. Auflage 2010, Seite 137 bekannt sind.

Aus der DE 10 2009 055 057 A1 ist ein Sensor zur Erfassung eines Drucks und einer Temperatur eines fluiden Mediums bekannt, bei dem sich der Temperaturmessfühler entweder in einem kanalförmigen Abschnitt des Gehäuses angeordnet ist oder in eine Hülse eingebracht ist, die sich wiederum in einem kanalförmigen Abschnitt des Gehäuses befindet. Ein Drucksensormodul ist mittels eines Zuführkanals direkt dem fluiden Medium ausgesetzt. Das Drucksensormodul weist ein Sensorelement auf, das auf einem Glassockel angebracht ist. Die EP 1 269 135 B1 offenbart einen Drucksensor, bei dem ein Drucksensormodul durch eine Membran von dem fluiden Medium getrennt ist. Zwischen der Membran und dem Drucksensormodul kann sich Öl befinden. Die Patentdokumente US 2007/0121701 A1, US 7 210 346 B1 und DE 10 2007 035 812 A1 offenbaren auch Sensoren zur Erfassung eines Drucks und einer Temperatur.

Trotz der durch diese Sensoren bewirkten Verbesserungen besteht nach wie vor ein Optimierungspotenzial bekannter Sensoren.

### Offenbarung der Erfindung

Bei der oben beschriebenen Anordnung, bei der sich der Temperaturmessfühler in einem Abschnitt des Sensorgehäuses befindet, ist der Temperaturmessfühler von dem fluiden Medium getrennt, so dass der Temperaturmessfühler keinen direkten Kontakt zu dem fluiden Medium aufweist. Dadurch weist der Temperaturmessfühler eine hohe Medienresistenz auf, allerdings führt diese Anordnung bedingt durch eine Wärmeübertragung zu dem Gehäuse zu verlängerten Ansprechzeiten sowie zu einer ungenauen Temperaturmessung des Temperaturmessfühlers, insbesondere in gasförmigen Medien. Das Ansprechverhalten und die Messgenauigkeit kann zwar durch die Anordnung mit der Hülse verbessert werden, allerdings weist auch bei dieser Anordnung das Drucksensormodul eine verringerte Medienresistenz auf, insbesondere in sauren Medien und in Laugen. Ferner kann der Zuführkanal im Bereich des Glasträgers, auf dem das Sensorelement bzw. der Sensorchip angeordnet ist, bei Abgasanwendungen verstopfen.

Es wird dementsprechend ein Sensor zur Erfassung eines Drucks und einer Temperatur eines fluiden Mediums vorgeschlagen, welcher die Nachteile bekannter Sensoren zumindest weitgehend vermeidet. Die Erfindung besteht aus einem Sensor zur Erfassung eines Drucks und einer Temperatur eines fluiden Mediums nach Anspruch 1.

Der Sensor zur Erfassung eines Drucks und einer Temperatur eines fluiden Mediums weist zumindest ein Gehäuse auf. Der Sensor weist weiterhin mindestens ein Drucksensormodul zur Erfassung des Drucks auf. Der Sensor weist weiterhin mindestens einen Temperaturmessfühler auf. Der Sensor weist mindestens einen Druckanschluss auf. Der Temperaturmessfühler ist zumindest teilweise in einer in das fluide Medium ragenden Hülse aufgenommen. Das Drucksensormodul ist durch eine Trennmembran von dem fluiden Medium getrennt. Mindestens ein Zuführkanal zum Zuführen des fluiden Mediums zu der Trennmembran ist zumindest teilweise in dem Druckanschluss angeordnet. Die Trennmembran ist zum Übertragen eines Drucks des fluiden Mediums auf das Drucksensormodul ausgebildet.

Die Hülse kann zumindest teilweise in dem Zuführkanal angeordnet sein. Der Sensor kann weiterhin mindestens ein Gehäuseunterteil aufweisen. Das Gehäuseunterteil kann auf einer dem fluiden Medium zuweisenden Seite mit dem Druckanschluss und der Trennmembran an einem radial äußeren Rand der Trennmembran verbunden sein. Der Druckanschluss kann mindestens ein Befestigungselement zum Befestigen des Sensors in oder an einer Wand eines das fluide Medium aufnehmenden Messraums aufweisen, insbesondere ein Außengewinde. Die Trennmembran kann zumindest teilweise zwischen dem Druckanschluss und dem Gehäuseunterteil angeordnet sein. Die Hülse kann mit dem Gehäuseunterteil und der Trennmembran verbunden sein und kann derart angeordnet sein, dass diese von dem Druckanschluss thermisch entkoppelt ist. Die Hülse kann beispielsweise von dem Druckanschluss derart beabstandet angeordnet sein, dass diese von dem Druckanschluss thermisch entkoppelt ist. Mit anderen Worten wird die thermische Entkoppelung durch einen Abstand zwischen der Hülse und dem Druckanschluss bewirkt bzw. dadurch bewirkt, dass die Hülse nicht direkt mit dem Druckanschluss verbunden ist. Das Gehäuse, insbesondere das Gehäuseunterteil und/oder der Druckanschluss, können die Trennmembran radial umschließen. Das Gehäuseunterteil kann eine ebene Auflagefläche aufweisen, wobei die Trennmembran zumindest teilweise auf der ebenen Auflagefläche aufliegt. Die Trennmembran kann radial mit dem Gehäuseunterteil verbunden sein, insbesondere durch eine druckdichte Verbindung, vorzugsweise durch eine formschlüssige Verbindung und besonders bevorzugt durch eine Verschweißung. Die Trennmembran kann von dem Drucksensormodul beabstandet angeordnet sein. Die Trennmembran kann zusätzlich von dem Gehäuseunterteil beabstandet angeordnet sein. Die Trennmembran ist so von dem Drucksensormodul, und beispielsweise auch dem Gehäuseunterteil, beabstandet angeordnet, dass ein Raum zwischen dem Drucksensormodul und der Trennmembran gebildet wird, der mit einer Flüssigkeit, insbesondere Öl, gefüllt ist, wobei die Flüssigkeit geeignet ist, einen auf die Trennmembran wirkenden Druck an das Drucksensormodul zu übertragen. Die Hülse kann mit der Trennmembran verbunden, insbesondere verschweißt, sein. Die Trennmembran weist erfindugsgemäß mindestens eine Bohrung auf, wobei die Bohrung durch die Hülse abgedichtet wird. Die Bohrung mündet erfindugsgemäß, beispielsweise durch Öffnung in dem Gehäuseunterteil, in einem Gehäuseinnenraum des Gehäuses, wobei in dem Gehäuseinnenraum das Drucksensormodul aufgenommen ist, wobei der Temperaturmessfühler elektrische Anschlussleitungen aufweist, die sich durch die Bohrung erstrecken und mit dem Drucksensormodul verbunden sind. Der Gehäuseinnenraum kann gegen das fluide Medium abgedichtet sein. Die Bohrung kann sich in der Mitte der Trennmembran befinden und von der Trennmembran ringförmig umgeben sein. Der Sensor kann eine Achse definieren und der Zuführkanal kann sich parallel zu der Achse erstrecken. Eine Längsachse der Hülse kann mit der Achse des Zuführkanals zusammenfallen. Das Drucksensormodul kann von der Achse des Zuführkanals beabstandet sein. Die Trennmembran kann zumindest teilweise aus Stahl, insbesondere aus Edelstahl, hergestellt sein. Die Trennmembran kann eine gewellte Form aufweisen.

Unter einer Trennmembran ist im Rahmen der vorliegenden Erfindung ein Gegenstand in Form einer dünnen Haut oder Folie zu verstehen. Unter einer dünnen Haut oder Folie ist dabei ein Gegenstand mit einer flächenhaften Ausdehnung in einer gewissen Höhe zu verstehen. Membranen haben die Eigenschaft, unter einer Belastung nur Zugkräfte aufzunehmen und an ihre Ränder weitergeben zu können. Der Begriff Trennmembran wird verwendet, da die Membran für eine räumliche Trennung von Räumen in dem Sensor sorgen kann.

Unter einem Stutzen ist im Rahmen der vorliegenden Erfindung ein kurzes rohrförmiges Ansatzstück zu verstehen, beispielsweise ein zumindest teilweise zylindrisch ausgebildetes Ansatzstück, beispielsweise mit einem runden oder einem polygonalen Querschnitt. Da im Rahmen der vorliegenden Erfindung der Zuführkanal zum Zuführen des Mediums zumindest teilweise in dem Stutzen ausgebildet ist und das fluide Medium üblicherweise einen Druck oberhalb des Atmosphären- oder Normaldrucks aufweist, wird der Stutzen im Rahmen der vorliegenden Erfindung als Druckstutzen oder Druckanschluss bezeichnet.

Unter einer Bohrung ist im Rahmen der vorliegenden Erfindung ein runder oder unrunder Durchbruch oder Kanal mit oder ohne Gewinde zu verstehen.

Unter einem Drucksensormodul ist im Rahmen der vorliegenden Erfindung ein vormontiertes Modul mit einem Sensorelement, welches die eigentlichen Messsignale bezüglich des Drucks und/oder der Messwerte liefert, die zur Erfassung des Drucks des fluiden Mediums genutzt werden, und weiteren Bauteilen zu verstehen. Beispielsweise kann das Sensorelement eine als Messbrücke ausgebildete Sensormembran mit einem oder mehreren piezoresistiven Elementen und/oder anderen Arten von sensitiven Elementen umfassen, wie dies bei Drucksensoren üblich ist. Für weitere mögliche Ausgestaltungen von derartigen Drucksensoren kann auf den oben beschriebenen Stand der Technik, insbesondere auf Konrad Reif (Hrsg.): Sensoren im Kraftfahrzeug, 1. Auflage 2010, Seiten 134-136 verwiesen werden. Auch andere Ausgestaltungen sind jedoch grundsätzlich möglich. Die weiteren Bauteile können beispielsweise Bauteile zur Signalverarbeitung, ein Gel als Schutz gegenüber dem fluiden Medium und Berührung, Bauteilen der Aufbau- und Verbindungstechnik, insbesondere Bond-Drähte, Kleber und dergleichen, ein Kunststoff-Moldkörper mit Stanzgitter und Kondensatoren sein. Bei den Bauteilen zur Signalverarbeitung kann es sich beispielsweise um eine anwendungsspezifische integrierte Schaltung (application-specific integrated circuit, ASIC) handeln, die auch als Custom-Chip bekannt ist. Eine derartige Schaltung ist eine elektronische Schaltung, die als integrierter Schaltkreis realisiert wird. Das Sensorelement und die Auswerteschaltung (ASIC) können sich auf zwei getrennten Chips oder auf einem gemeinsamen Chip befinden. Beispielsweise kann das Drucksensormodul zur Erfassung eines Drucks einen Glassockel sowie einen auf diesem angeordneten Siliziumchip als Sensorelement aufweisen kann, auf dessen Oberfläche beispielsweise eine Messbrücke vorgesehen ist, die beispielsweise in Form einer Wheatstone-Brücke aus piezoresistiven Widerstandselementen aufgebaut sein kann. Die für die Druckerfassung notwendige Membran kann durch Ätzen der Siliziumchiprückseite hergestellt sein. Das Sensorelement kann mit dem Glassockel verbunden sein und beinhaltet mindestens die Messbrücke.

Unter einem Temperaturmessfühler ist im Rahmen der vorliegenden Erfindung jede Art von bekannten Temperatursensoren zu verstehen, insbesondere so genannte NTCs, d. h. temperaturabhängige elektrische Widerstände mit einem negativen Temperaturkoeffizienten, deren elektrischer Widerstand mit der Temperatur variiert, insbesondere bei steigender Temperatur abnimmt. Denkbar sind jedoch auch PTCs, d. h. elektrische Widerstände mit positiven Temperaturkoeffizienten, deren Widerstand mit steigender Temperatur zunimmt. Für weitere mögliche Ausgestaltungen von derartigen Temperatursensoren kann auf den oben beschriebenen Stand der Technik, insbesondere auf Konrad Reif (Hrsg.): Sensoren im Kraftfahrzeug, 1. Auflage 2010, Seite 137, verwiesen werden. Auch andere Ausgestalt-Trennmembran an einem radial äußeren Rand der Trennmembran verbunden sein. Der Druckanschluss kann mindestens ein Befestigungselement zum Befestigen des Sensors in oder an einer Wand eines das fluide Medium aufnehmenden Messraums aufweisen, insbesondere ein Außengewinde. Die Trennmembran kann zumindest teilweise zwischen dem Druckanschluss und dem Gehäuseunterteil angeordnet sein. Die Hülse kann mit dem Gehäuseunterteil und der Trennmembran verbunden sein und kann derart angeordnet sein, dass diese von dem Druckanschluss thermisch entkoppelt ist. Die Hülse kann beispielsweise von dem Druckanschluss derart beabstandet angeordnet sein, dass diese von dem Druckanschluss thermisch entkoppelt ist. Mit anderen Worten wird die thermische Entkoppelung durch einen Abstand zwischen der Hülse und dem Druckanschluss bewirkt bzw. dadurch bewirkt, dass die Hülse nicht direkt mit dem Druckanschluss verbunden ist. Das Gehäuse, insbesondere das Gehäuseunterteil und/oder der Druckanschluss, können die Trennmembran radial umschließen. Das Gehäuseunterteil kann eine ebene Auflagefläche aufweisen, wobei die Trennmembran zumindest teilweise auf der ebenen Auflagefläche aufliegt. Die Trennmembran kann radial mit dem Gehäuseunterteil verbunden sein, insbesondere durch eine druckdichte Verbindung, vorzugsweise durch eine formschlüssige Verbindung und besonders bevorzugt durch eine Verschweißung. Die Trennmembran kann von dem Drucksensormodul beabstandet angeordnet sein. Die Trennmembran kann zusätzlich von dem Gehäuseunterteil beabstandet angeordnet sein. Die Trennmembran ist so von dem Drucksensormodul, und beispielsweise auch dem Gehäuseunterteil, beabstandet angeordnet, dass ein Raum zwischen dem Drucksensormodul und der Trennmembran gebildet wird, der mit einer Flüssigkeit, insbesondere Öl, gefüllt ist, wobei die Flüssigkeit geeignet ist, einen auf die Trennmembran wirkenden Druck an das Drucksensormodul zu übertragen. Die Hülse kann mit der Trennmembran verbunden, insbesondere verschweißt, sein. Die Trennmembran weist erfindungsgemäß mindestens eine Bohrung auf, wobei die Bohrung durch die Hülse abgedichtet wird. Die Bohrung mündet erfindungsgemäß, beispielsweise durch eine Öffnung in dem Gehäuseunterteil, in einem Gehäuseinnenraum des Gehäuses, wobei in dem Gehäuseinnenraum das Drucksensormodul aufgenommen ist, wobei der Temperaturmessfühler elektrische Anschlussleitungen aufweist, die sich durch die Bohrung erstrecken und mit dem Drucksensormodul verbunden sind. Der Gehäuseinnenraum kann gegen das fluide Medium abgedichtet sein. Die Bohrung kann sich in der Mitte der Trennmembran befinden und von der Trennmembran ringförmig umgeben sein. Der Sensor kann eine Achse definieren und der Zuführkanal kann sich parallel zu der Achse erstrecken. Eine Längsachse der Hülse kann mit der Achse des Zuführkanals zusammenfallen. Das Drucksensormodul kann von der Achse des Zuführkanals beabstandet sein. Die Trennmembran kann zumindest teilweise aus Stahl, ungen sind jedoch grundsätzlich möglich.

Unter einem Gehäuseinnenraum ist im Rahmen der vorliegenden Erfindung insbesondere derjenige Raum in einem Gehäuse eines Sensors zur Erfassung eines Drucks und einer Temperatur zu verstehen, in dem sich die Elektronik, wie beispielsweise ein Schaltungsträger mit einer Auswerteschaltung und deren elektrische Anschlüsse befinden, so dass dieser auch als Elektronikraum bezeichnet werden kann.

Ein Gedanke der Erfindung ist, einen Druck eines fluiden Mediums indirekt auf ein Drucksensormodul wirken zu lassen, so dass das Drucksensormodul nicht dem fluiden Medium ausgesetzt ist und von diesem beschädigt werden kann, sowie den Temperaturmessfühler von dem Druckanschluss thermisch zu entkoppeln. Durch die erfindungsgemäße Ausgestaltung des Sensors wirkt ein Druck des Mediums auf die Trennmembran und wird durch diese beispielsweise mittels eines Öls auf das Sensorelement des Drucksensormoduls, das eine Druckmembran eines Sensorchips sein kann, übertragen. Somit schützt die Trennmembran das Messelement bzw. Sensorelement des Drucksensormoduls vor aggressiven Medien.

Der Temperaturmessfühler kann sich in einer Hülse befinden, welche in direktem Kontakt mit dem fluiden Medium ist. Insbesondere kann die Hülse nicht direkt an den Druckstutzen angeschlossen, sondern mit der Membran und einem Gehäuseunterteil verschweißt sein. Die hohe Medienresistenz des Sensorelements ist insbesondere bei Anwendungen des Sensors in aggressiven Medien, wie beispielsweise im Bereich eines Abgasstrangs einer Brennkraftmaschine, insbesondere einer Brennkraftmaschine mit Abgasnachbehandlung, wie beispielsweise bei der Rauchgasentstickung (DeNOx), bei der beispielsweise Harnstoff auf den Sensor wirken kann, von Bedeutung. Aufgrund der thermischen Entkoppelung der Hülse des Temperaturmessfühlers von dem Druckstutzen des Sensors weist dieser eine vergleichsweise schnelle Ansprechzeit auf. Dadurch wird auch eine exakte Temperaturmessung, insbesondere bei gasförmigen Medien, wie sie beispielsweise Erdgasmotoren verwendet werden, aufgrund der thermischen Entkoppelung der Hülse vom Druckstutzen und des direkten Kontakts der Hülse mit dem Medium, erreicht. Ferner ist die Hülse durch den umhüllenden Druckstutzen vor dem strömenden Medium geschützt. Auch bei hohen Schüttelbelastungen weist der Sensor eine gute Dauerhaltbarkeit auf. Die erfindungsgemäße Ausgestaltung des Sensors erlaubt eine Modularität des Konzeptes für einen Einsatz unterschiedlicher Temperatursensoren und Sensorchips des Drucksensormoduls. Auch wird durch die Erfindung der Aufbau des Sensors vereinfacht und somit kostengünstiger gestaltet. Ein Zuführkanal in dem Druckstutzen wird durch Abgas nicht verstopft, da er mit einem ausreichenden Innendurchmesser ausgebildet werden kann.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen
- Figur 1: eine Explosionsdarstellung eines erfindungsgemäßen Sensors zur Erfassung eines Drucks und einer Temperatur eines fluiden Mediums,
- Figur 2: eine Schnittansicht entlang einer Längsachse des Sensors und
- Figur 3: eine perspektivische Ansicht des Sensors ohne Druckstutzen.

### Ausführungsformen der Erfindung

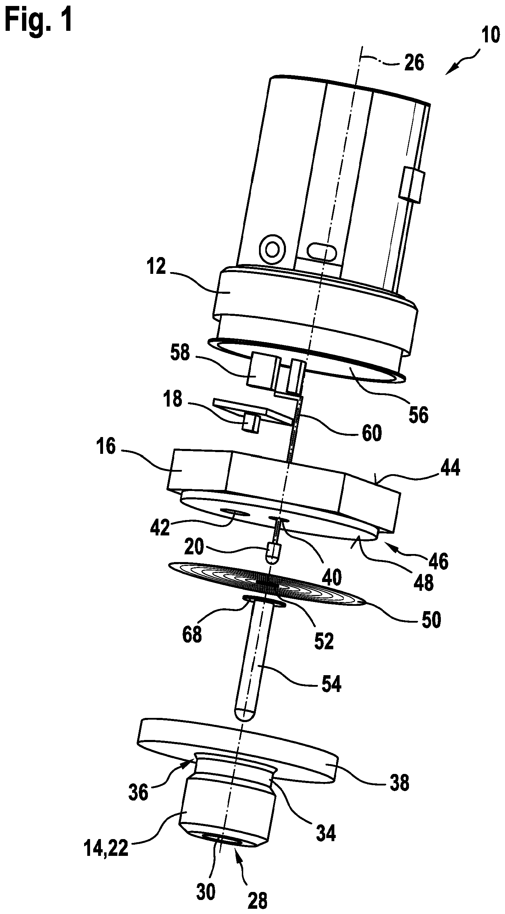

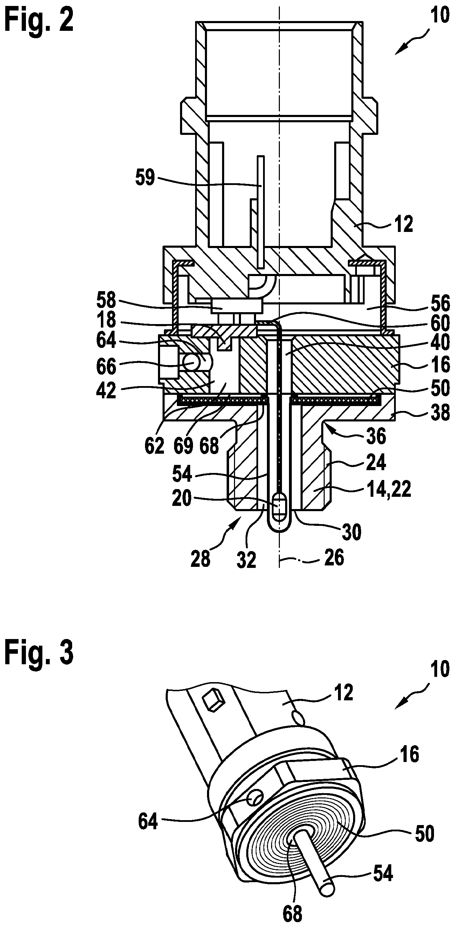

In Figur 1 ist eine beispielhafte Ausführungsform eines erfindungsgemäßen Sensors 10 zur Erfassung eines Drucks und einer Temperatur eines fluiden Mediums in einer Explosionsdarstellung gezeigt. Der Sensor 10 kann beispielsweise zum Erfassen eines Drucks von Kraftstoff in einer Kraftstoffleitung eines Verbrennungsmotors oder von Abgas in einem Abgasstrang des Verbrennungsmotors ausgebildet sein. Der Sensor 10 umfasst ein Sensorgehäuse 12, einen Druckanschluss 14, ein Gehäuseunterteil 16 in Form eines Sechskants, ein Drucksensormodul 18 zur Erfassung des Drucks des fluiden Mediums und einen Temperaturmessfühler 20 zur Erfassung der Temperatur des fluiden Mediums. Das Gehäuse 12 ist beispielsweise als Steckergehäuse zum Verbinden mit einem elektrischen Stecker ausgebildet. Der Druckanschluss 14 kann vollständig oder teilweise aus Metall hergestellt sein und kann als zylindrischer Druckstutzen 22, insbesondere als Gewindestutzen mit einem Außengewinde 24 (Figur 2), ausgebildet sein, dessen Zylinderachse mit einer Längsachse 26 des Sensors 10 zusammenfällt. Der Druckanschluss 14 weist an einem dem fluiden Medium zuweisenden Ende 28 eine Öffnung 30 für das zu messende druckbeaufschlagte Medium auf, das sich in einem nicht gezeigten Messraum, wie beispielsweise einer Kraftstoffleitung, befindet. Bei einer Ausführung des Druckanschlusses 14 als Gewindestutzen kann dieser ein Befestigungselement in Form eines Außengewindes 24 (Figur 2) aufweisen, das dazu dient, den Druckanschluss 14 an oder in einer Wand des Messraums zu befestigen, wobei das Außengewinde 24 in ein passend geformtes Innengewinde der Wand des Messraums greift. In seinem Inneren weist der Druckanschluss 14 einen sich an die Öffnung 30 anschließenden Zuführkanal 32 (Figur 2) zum Zuführen des fluiden Mediums zu dem Drucksensormodul 18 auf. Der Zuführkanal 32 erstreckt sich koaxial zu der Zylinderachse des Druckanschlusses 14 und der Längsachse 26 des Sensors 10. An seiner Außenumfangsfläche kann der Druckanschluss 14 eine in Umfangsrichtung verlaufende Nut 34 aufweisen, in die ein nicht gezeigter O-Ring eingebracht werden kann.

Der Druckanschluss 14 weist weiterhin an einem dem fluiden Medium abgewandten Ende 36 einen Flansch 38 in der Form eines runden Tellers auf.

Das Gehäuseunterteil 16 weist in seiner Mitte eine Öffnung 40 auf, durch die sich der Temperaturmessfühler 20 hindurch erstreckt. Ferner weist das Gehäuseunterteil 16 eine Bohrung 42 auf, die sich parallel zu der Öffnung 40 und der Längsachse 26 des Sensors 10 in Form eines Durchgangslochs durch das Gehäuseunterteil 16 hindurch erstreckt. Auf einer gehäuseseitigen Stirnseite 44 des Gehäuseunterteils 16, die eine Seite des Gehäuseunterteils 16 ist, auf der das Gehäuse 12 angeordnet und befestigt wird, wird die Bohrung 42 von dem Drucksensormodul 18 mediendicht verschlossen. Das Drucksensormodul 18 ist somit von der Längsachse 26 und der Zylinderachse des Druckanschlusses 14 beabstandet. Auf einer druckanschlussseitigen Stirnseite 46, die eine Seite des Gehäuseunterteils 16 ist, auf der der Druckanschluss 14 mit dem Flansch 38 befestigt wird, endet die Bohrung 42 in einer ebenen Auflagefläche 48 des Gehäuseunterteils 16, auf der ein radial äußerer Rand einer Trennmembran 50 aufliegt, die zumindest teilweise aus Edelstahl hergestellt sein kann, und kann dort von der Trennmembran 50 mediendicht verschlossen werden. Die Trennmembran 50 weist eine gewellte Form auf. In ihrer Mitte weist die Trennmembran 50 eine Bohrung 52 auf, durch die der Temperaturmessfühler 20 hindurch in eine Hülse 54 hineinragt. Die Bohrung 52 wird von der Trennmembran 50 ringförmig umgeben. Die Bohrung 52 und die Öffnung 40 des Gehäuseunterteils 16 überlappen in der Richtung der Längsachse 26. In einem radial inneren Bereich um die Bohrung 52 liegt die Trennmembran 50 ebenfalls auf der Auflagefläche 48 um den Rand der Öffnung 40 auf. Die Hülse 54 kann zumindest teilweise aus Stahl hergestellt sein. Die Hülse 54 ragt in den Zuführkanal 32 in dem Druckanschluss 14 hinein. Die Hülse 54 kann eine Wandstärke von 0,1 mm bis 0,4 mm und bevorzugt von 0,2 mm bis 0,3 mm aufweisen, beispielsweise eine Wandstärke von 0,25 mm. In einem Gehäuseinnenraum 56 des Gehäuses 12 sind Kontaktfedern 58 zur elektrischen Kontaktierung zwischen Steckerpins 59 und dem Drucksensormodul 18 aufgenommen. Beispielsweise sind drei oder vier Kontaktfedern 58 vorgesehen. Der Temperaturmessfühler 20 kann über Anschlussleitungen 60 mit dem Drucksensormodul 18 verbunden sein, wobei sich die Anschlussleitungen 60 durch die Bohrung 52 in der Trennmembran 50 und die Öffnung 40 in dem Gehäuseunterteil 16 hindurch erstrecken.

Wie in Figur 2 gut zu erkennen ist, umschließen das Gehäuseunterteil 16 und/oder der Druckanschluss 14 die Trennmembran 50 radial. Somit ist die Trennmembran 50 zwischen dem Druckanschluss 14 und dem Gehäuseunterteil 16 angeordnet.

Insbesondere ist die Trennmembran 50 radial mit dem Gehäuseunterteil 16 und dem Druckanschluss 14 an ihrem radial bezüglich der Längsachse 26 des Sensors 10 äußeren Rand verschweißt. Somit ist die Trennmembran 50 radial mit dem Gehäuseunterteil 16 verbunden, insbesondere durch eine druckdichte Verbindung, vorzugsweise durch eine formschlüssige Verbindung und besonders bevorzugt durch eine Verschweißung. Wie Figur 2 weiter zeigt, ist durch die Anordnung des Drucksensormoduls 18 auf der gehäuseseitigen Stirnfläche 44 des Gehäuseunterteils 16 und der Anordnung der Trennmembran 50 auf der druckanschlussseitigen Stirnfläche 46 die Trennmembran 50 von dem Drucksensormodul 18 beabstandet angeordnet. Entsprechend bildet die Bohrung 42 einen Raum 62 zwischen dem Drucksensormodul 18 und der Trennmembran 50. Der Raum 62 kann mit einer Flüssigkeit, insbesondere Öl, wie beispielsweise Silikonöl, gefüllt sein, wobei die Flüssigkeit geeignet ist, einen Druck des fluiden Mediums, das durch den Zuführkanal 32 zu der Trennmembran 50 gelangt, an das Sensorelement des Drucksensormoduls18 zu übertragen. Um den Raum 62 befüllen zu können, weist dieser zumindest einen sich in radialer Richtung bezüglich der Längsachse 26 des Sensors 10 erstreckenden Füllkanal 64 auf. Dieser Füllkanal 64 kann nach dem Füllvorgang mittels einer Einpresskugel 66 verschlossen werden. Entsprechend ist das Drucksensormodul 18 von dem fluiden Medium in dem Zuführkanal 32 durch die Trennmembran 50 getrennt.

Figur 3 zeigt eine perspektivische Ansicht auf die an dem Gehäuseunterteil 16 angebrachte Trennmembran 50, wobei der Druckanschluss 14 aus Gründen der Übersichtlichkeit für die nachstehenden Ausführungen weg gelassen ist. Die Hülse 54 kann an ihrem freien Ende beispielsweise einen tellerförmigen Forstsatz 68 oder Vorsprung aufweisen. Die Hülse 54 kann beispielsweise so die Bohrung 52 der Trennmembran 50 umgebend angeordnet werden, dass der tellerförmige Fortsatz 68 auf der dem fluiden Medium bzw. dem Zuführkanal 32 zuweisenden Seite der Trennmembran 50 um den Rand der Bohrung 52 aufliegt. Der tellerförmige Fortsatz 68 der Hülse 54 wird beispielsweise zusammen mit der Trennmembran 50 und dem Gehäuseunterteil 16 in dem Bereich um die Bohrung 52 verschweißt, in dem die Trennmembran 50 auf der Auflagefläche 48 aufliegt. Da die Trennmembran 50 eine gewellte Form aufweist, liegt diese mit Ausnahme des radial äußeren Rands und des Bereichs um die Bohrung 52 nicht eben oder plan an dem Gehäuseunterteil 16 auf. Daher kann ein kleiner Spalt 69 zwischen der Trennmembran 50 und dem Gehäuseunterteil 16 gebildet werden, in den die Flüssigkeit aus dem Raum 62 gelangen kann. Die gewellte Form der Trennmembran 50 ermöglicht eine Übertragung des Drucks des fluiden Mediums in dem Zuführkanal 32 auf die Trennmembran 50 und von dieser auf die Flüssigkeit in dem Spalt 69 und den Raum 62. Die Flüssigkeit in dem Spalt 69 und dem Raum 62 überträgt dann den Druck an das Drucksensormodul 18. Die Verschweißung des tellerförmigen Fortsatzes 68 verhindert einen Austritt der Flüssigkeit aus dem Raum 62 und dem Spalt 69 in den Zuführkanal 32 als auch in die Öffnung 40. Die Hülse 54 kann wie oben erwähnt mit der Trennmembran 50 und dem Gehäuseunterteil 16 verschweißt oder alternativ verlötet sein. Dabei kann die Hülse 54 so mit der Trennmembran 50 verschweißt werden, dass die Bohrung 52 von der Hülse 54 mediendicht abgedichtet wird, wie in Figur 3 gezeigt ist. Die Hülse 54 verschließt also die Bohrung 52 auf der dem fluiden Medium zugewandten Seite der Trennmembran 50. Wie Figur 2 zeigt, ist die Hülse 54 so koaxial von dem Druckanschluss 14 umgeben, dass die Hülse 54 keine Wand des Zuführkanals 32 berührt, sondern von dem Druckanschluss 14 beabstandet ist. Dadurch sind die Hülse 54 und insbesondere der Temperaturmessfühler 20 von dem Druckanschluss 14 thermisch entkoppelt. Insbesondere ist die Hülse 54 mit dem Druckanschluss 14 nur indirekt mittels der Trennmembran 50 verbunden, so dass nur ein geringfügiger oder kein Wärmeübergang von dem Druckanschluss 14 auf die Hülse 54 und den Temperaturmessfühler 20 erfolgt. Somit ist der Gehäuseinnenraum 56 einerseits mittels der Trennmembran 50 und der damit verschweißten Hülse 54 im Bereich der Öffnung 40 des Gehäuseunterteils 16 und andererseits mittels der Trennmembran 50 im Bereich der Bohrung 42 und dem Drucksensormodul 18 gegenüber dem fluiden Medium abgedichtet.

Entsprechend der erfindungsgemäßen Ausbildung des Sensors 10 gelangt das fluide Medium durch die Öffnung 30 in den Zuführkanal 32. In dem Zuführkanal 32 erfasst der Temperaturmessfühler 20 die Temperatur des fluiden Mediums, wobei ein freies Ende oder eine Spitze des Temperaturmessfühlers 20 und der Hülse 54 etwas über den Druckanschluss 14 in der Richtung der Längsachse 26 in das fluide Medium vorstehen kann. Entsprechend ist der Temperaturfühler 20 nah an dem strömenden fluiden Medium angeordnet. Eine vergleichsweise lange Hülse 54, die länger als der Druckanschluss 14 in das fluide Medium vorstehen kann, bewirkt eine thermische Entkopplung des Temperaturfühlers 20 von dem Druckanschluss 14, so dass der Temperaturmessfühler 20 eine schnelle Ansprechzeit erreicht. Der Druck des fluiden Mediums in dem Zuführkanal 32 wirkt auf die Trennmembran 50. Aufgrund der mediendichten und/oder druckdichten Verbindung der Hülse 54 mit der Trennmembran 50, kann das Medium nicht die Bohrung 52 durchdringen und in die Öffnung 40 des Gehäuseunterteils 16 und somit in den Gehäuseinnenraum 56 gelangen. Der auf die Trennmembran 50 wirkende Druck wird im Bereich der Bohrung 42 auf das Öl in dem Spalt 69 und in dem Raum 62 übertragen, wobei das Öl den Druck an das Drucksensormodul 18 überträgt. Eine Verbindung zwischen der Bohrung 42 bzw. dem Raum 62 und dem Zuführkanal 32 besteht nicht, da diese durch die Trennmembran 50 getrennt sind. Daher wird der Druck des fluiden Mediums von dem Drucksensormodul 18 ohne direkten Kontakt zu dem fluiden Medium erfasst.

Zum Herstellen und/oder Montieren bzw. Zusammenbauen des Sensors 10 kann beispielsweise wie folgt vorgegangen werden. Die Hülse 54 kann mit der Trennmembran 50 und mit dem Gehäuseunterteil 16 verschweißt werden, wobei die Trennmembran 50 beispielsweise mit dem tellerförmigen Rand oder Fortsatz 68 der Hülse 54 verschweißt werden kann, so dass die Bohrung 52 verschlossen wird. Der Druckanschluss 14 und die Trennmembran 50 können in einem radial äußeren Bereich mit dem Gehäuseunterteil 16 verschweißt sein. Alternativ oder zusätzlich kann das Gehäuseunterteil 16 mit der Trennmembran 50 in einem radial äußeren Bereich und einen radial inneren Bereich um die Bohrung 52 verschweißt werden. Dann kann der Temperaturmessfühler 20 in die Hülse 54 eingebracht werden. Das Drucksensormodul 18 kann beispielsweise durch Kleben an dem Gehäuseunterteil 16 so befestigt werden, dass das Drucksensormodul 18 die Bohrung 42 auf der gehäuseseitigen Stirnseite 44 des Gehäuseunterteils 16 verschließt. Der Temperaturmessfühler 20 kann mittels Anschlussleitungen 60 mit dem Drucksensormodul 18, wie beispielsweise einer Leiterplatte an dem Drucksensormodul 18, in dem Gehäuseinnenraum 56 verbunden werden, beispielsweise mittels Löten oder Schweißen. Dann kann der Raum 62 in der Bohrung 42 mit Öl gefüllt werden und durch die Kugel 66 verschlossen werden. Das Gehäuse 12 kann mit dem Gehäuseunterteil 16 verschweißt, verklebt oder mittels Bördeln befestigt werden. Daran im Anschluss oder vor einem Steckerschweißen kann ein Abgleich des Sensors 10 erfolgen und der Sensor 10 an seinem endgültigen Einsatzort montiert und beispielsweise mittels Schweißen befestigt werden. Als Alternative kann das Drucksensormodul 18 bzw. der Sensorchip vor der Montage in dem Sensor 10 abgeglichen werden. Das Gehäuse 12 wird dann mit einem elektrischen Gegenstecker verbunden, der die Signale des Drucksensormoduls 18 und des Temperaturmessfühlers 20 an ein nicht gezeigtes Steuergerät, wie beispielsweise ein Motorsteuergerät, weiterleiten kann.

Durch die Trennmembran 50 und die Hülse 54 wird eine hohe Medienresistenz sowohl des Temperaturmessfühlers 20 als auch des Drucksensormoduls 18 gegenüber Abgas, Harnstoff oder ähnlichen aggressiven Medien geschaffen, da diese nicht in direkten Kontakt treten. Aufgrund der thermischen Entkoppelung der Hülse 54 von dem Druckanschluss 14 wird eine schnelle Ansprechzeit des Temperaturmessfühlers 20 ermöglicht. Dies erhöht auch die Temperaturmessgenauigkeit, insbesondere bei gasförmigen Medien, wie sie insbesondere bei Erdgasmotoren relevant sind. Die Hülse 54 ist somit nicht direkt mit dem Druckanschluss 14 verbunden. Das eigentliche Messelement des Temperaturmessfühlers 20 kann dabei nahe an dem strömenden fluiden Medium angeordnet werden und weist somit eine relativ exakte Temperaturmessgenauigkeit auf. Bei einer ausreichenden Länge der Hülse 54 wird der Temperaturmessfühler 20 besonders gut vom Druckanschluss 14 thermisch entkoppelt und erreicht dadurch eine schnelle Ansprechzeit. Ferner ist die Hülse 54 vor dem strömenden fluiden Medium durch den die Hülse 54 umgebenden Druckanschluss 14 geschützt. Der Temperaturmessfühler 20 wird durch die Hülse 54 vor dem strömenden fluiden Medium geschützt.

## Patentansprüche

1. Sensor (10) zur Erfassung eines Drucks und einer Temperatur eines fluiden Mediums, wobei der Sensor (10) mindestens ein Gehäuse (12) aufweist, wobei der Sensor (10) weiterhin mindestens ein Drucksensormodul (18) zur Erfassung des Drucks aufweist, wobei der Sensor (10) weiterhin mindestens einen Temperaturmessfühler (20) aufweist, wobei der Sensor (10) mindestens einen Druckanschluss (14) aufweist, wobei der Temperaturmessfühler (20) zumindest teilweise in einer in das fluide Medium ragenden Hülse (54) aufgenommen ist,
wobei das Drucksensormodul (18) durch eine Trennmembran (50) von dem fluiden Medium getrennt ist, wobei mindestens ein Zuführkanal (32) zum Zuführen des fluiden Mediums zu der Trennmembran (50) zumindest teilweise in dem Druckanschluss (14) angeordnet ist, wobei die Trennmembran (50) zum Übertragen eines Drucks des fluiden Mediums auf das Drucksensormodul (18) ausgebildet ist, wobei die Trennmembran (50) so von dem Drucksensormodul (18) beabstandet angeordnet ist, dass ein Raum (62) zwischen dem Drucksensormodul (18) und der Trennmembran (50) gebildet wird, der mit einer Flüssigkeit gefüllt ist, wobei die Flüssigkeit geeignet ist, einen auf die Trennmembran (50) wirkenden Druck an das Drucksensormodul (18) zu übertragen, **dadurch gekennzeichnet, dass** die Trennmembran (50) mindestens eine Bohrung (52) aufweist, wobei die Bohrung (52) durch die Hülse (54) abgedichtet ist und wobei die Bohrung (52) in einem Gehäuseinnenraum (56) des Gehäuses (12) mündet, wobei in dem Gehäuseinnenraum (56) das Drucksensormodul (18) aufgenommen ist, wobei der Temperaturmessfühler (20) elektrische Anschlussleitungen (60) aufweist, die sich durch die Bohrung (52) erstrecken und mit dem Drucksensormodul (18) verbunden sind.

2. Sensor (10) nach dem vorhergehenden Anspruch, wobei die Hülse (54) zumindest teilweise in dem Zuführkanal (32) angeordnet ist.

3. Sensor (10) nach einem der beiden vorhergehenden Ansprüche, wobei der Sensor (10) weiterhin mindestens ein Gehäuseunterteil (16) aufweist, wobei das Gehäuseunterteil (16) auf einer dem fluiden Medium zuweisenden Seite mit dem Druckanschluss (14) und der Trennmembran (50) an einem radial äußeren Rand der Trennmembran (50) verbunden ist.

4. Sensor (10) nach dem vorhergehenden Anspruch, wobei die Trennmembran (50) zumindest teilweise zwischen dem Druckanschluss (14) und dem Gehäuseunterteil (16) angeordnet ist.

5. Sensor (10) nach einem der drei vorhergehenden Ansprüche, wobei die Hülse (54) mit dem Gehäuseunterteil (16) und der Trennmembran (50) verbunden ist, und derart angeordnet ist, dass diese von dem Druckanschluss (14) thermisch entkoppelt ist.

6. Sensor (10) nach einem der drei vorhergehenden Ansprüche, wobei das Gehäuseunterteil (16) eine ebene Auflagefläche (48) aufweist, wobei die Trennmembran (50) zumindest teilweise auf der ebenen Auflagefläche (48) aufliegt.

7. Sensor (10) nach dem vorhergehenden Anspruch, wobei die Trennmembran (50) radial mit dem Gehäuseunterteil (16) verbunden ist, insbesondere durch eine druckdichte Verbindung, vorzugsweise durch eine formschlüssige Verbindung und besonders bevorzugt durch eine Verschweißung.

8. Sensor (10) nach dem vorhergehenden Anspruch, wobei der Raum (62) mit Öl gefüllt ist.

## Claims

1. Sensor (10) for measuring a pressure and a temperature of a fluid medium, the sensor (10) having at least one housing (12), the sensor (10) further having at least one pressure sensor module (18) for measuring the pressure, the sensor (10) further having at least one temperature sensor (20), the sensor (10) having at least one pressure connection (14), the temperature sensor (20) being at least partly accommodated in a sleeve (54) projecting into the fluid medium,
the pressure sensor module (18) being separated from the fluid medium by a separating diaphragm (50), at least one feed channel (32) for feeding the fluid medium to the separating diaphragm (50) being at least partly arranged in the pressure connection (14), the separating diaphragm (50) being designed to transmit a pressure of the fluid medium to the pressure sensor module (18), the separating diaphragm (50) being arranged at a distance from the pressure sensor module (18) in such a way that a space (62) which is filled with a liquid is formed between the pressure sensor module (18) and the separating diaphragm (50), the liquid being suitable to transmit a pressure acting on the separating diaphragm (50) to the pressure sensor module (18), **characterized in that** the separating diaphragm (50) has at least one hole (52), wherein the hole (52) is sealed off by the sleeve (54) and wherein the hole (52) opens into a housing internal space (56) of the housing (12), wherein the pressure sensor module (18) is accommodated in the housing internal space (56), wherein the temperature sensor (20) has electric connecting lines (60) which extend through the hole (52) and are connected to the pressure sensor module (18).

2. Sensor (10) according to the preceding claim, wherein the sleeve (54) is at least partly arranged in the feed channel (32).

3. Sensor (10) according to one of the two preceding claims, wherein the sensor (10) further has at least one lower housing part (16), wherein the lower housing part (16) is connected on a side facing the fluid medium to the pressure connection (14) and the separating diaphragm (50) at a radially outer edge of the separating diaphragm (50) .

4. Sensor (10) according to the preceding claim, wherein the separating diaphragm (50) is at least partly arranged between the pressure connection (14) and the lower housing part (16).

5. Sensor (10) according to one of the three preceding claims, wherein the sleeve (54) is connected to the lower housing part (16) and the separating diaphragm (50) and is arranged in such a way that it is thermally decoupled from the pressure connection (14).

6. Sensor (10) according to one of the three preceding claims, wherein the lower housing part (16) has a flat bearing surface (48), wherein the separating diaphragm (50) rests at least partly on the flat bearing surface (48).

7. Sensor (10) according to the preceding claim, wherein the separating diaphragm (50) is connected radially to the lower housing part (16), in particular by a pressure-tight connection, preferably by a form-fitting connection and particularly preferably by a weld.

8. Sensor (10) according to the preceding claim, wherein the space (62) is filled with oil.

## Revendications

1. Capteur (10) destiné à la détection d'une pression et d'une température d'un milieu fluide, le capteur (10) présentant au moins un boîtier (12), le capteur (10) présentant en outre au moins un module capteur de pression (18) pour détecter la pression, le capteur (10) comprenant en outre au moins une sonde de mesure de température (20), le capteur (10) présentant au moins un raccord de pression (14), la sonde de mesure de température (20) étant au moins partiellement logée dans un manchon (54) plongeant dans le milieu fluide,
le module capteur de pression (18) étant séparé du milieu fluide par une membrane de séparation (50), au moins un conduit d'alimentation (32) destiné à amener le milieu fluide vers la membrane de séparation (50) étant au moins partiellement disposé dans le raccord de pression (14), la membrane de séparation (50) étant configurée pour transmettre une pression du milieu fluide au module capteur de pression (18), la membrane de séparation (50) étant disposée espacée du module capteur de pression (18) de telle sorte qu'un espace (62) est formé entre le module capteur de pression (18) et la membrane de séparation (50), lequel est rempli d'un liquide, le liquide étant adapté pour transmettre au module capteur de pression (18) une pression qui agit sur la membrane de séparation (50), **caractérisé en ce que** la membrane de séparation (50) possède au moins un perçage (52), le perçage (52) étant rendu étanche par le manchon (54) et le perçage (52) débouchant dans un espace intérieur de boîtier (56) du boîtier (12), le module capteur de pression (18) étant logé dans l'espace intérieur de boîtier (56), la sonde de mesure de température (20) possédant des lignes de raccordement électrique (60) qui s'étendent à travers le perçage (52) et qui sont raccordées au module capteur de pression (18).

2. Capteur (10) selon la revendication précédente, le manchon (54) étant au moins partiellement disposé dans le conduit d'alimentation (32).

3. Capteur (10) selon l'une des deux revendications précédentes, le capteur (10) comprenant en outre au moins une partie inférieure de boîtier (16), la partie inférieure de boîtier (16) étant reliée, sur un côté tourné vers le milieu fluide, au raccord de pression (14) et, au niveau d'un bord radialement extérieur de la membrane de séparation (50), à la membrane de séparation (50) .

4. Capteur (10) selon la revendication précédente, la membrane de séparation (50) étant au moins partiellement disposée entre le raccord de pression (14) et la partie inférieure de boîtier (16).

5. Capteur (10) selon l'une des trois revendications précédentes, le manchon (54) étant relié à la partie inférieure de boîtier (16) et à la membrane de séparation (50) et étant disposé de telle sorte que celui-ci est découplé thermiquement du raccord de pression (14).

6. Capteur (10) selon l'une des trois revendications précédentes, la partie inférieure de boîtier (16) présentant une surface d'appui plane (48), la membrane de séparation (50) reposant au moins partiellement sur la surface d'appui plane (48).

7. Capteur (10) selon la revendication précédente, la membrane de séparation (50) étant reliée radialement à la partie inférieure de boîtier (16), en particulier par une liaison étanche à la pression, de préférence par une liaison par complémentarité de formes et de manière particulièrement préférée, par un soudage.

8. Capteur (10) selon la revendication précédente, l'espace (62) étant rempli d'huile.
